# DEMANDE DE BREVET EUROPEEN

(11) **EP 2 870 870 A2**
(43) Date de publication de la demande: **13.05.2015**
(21) Numéro de dépôt: 14183135.4
(22) Date de dépôt: 02.09.2014
(51) Int. Cl.: A01K 5/00, E02F 3/407, A01F 25/16

(54) **GODET DE DISTRIBUTION**

(30) Priorité: 02.09.2013 FR 1358377
(71) Demandeur: Etablissements Emily, 29800 Treflevenez (FR)
(72) Inventeur: Miossec, Arnaud, 29440 PLOUZEVEDE (FR); Rungoat, David, 29800 TREFLEVENEZ (FR); Le Milbeau, Lionel, 29410 GUICLAN (FR)
(74) Mandataire: Maillet, Alain

(57) **Abrégé**

La présente invention se rapporte à un godet de distribution (10) comprenant une benne (20) incluant un moyen de déchargement (30) conçu pour évacuer à l'extérieur son contenu au travers d'une ouverture (V) pratiquée dans une paroi (P) de ladite benne, un moyen (40) capable de réguler le débit de matière susceptible de se déposer sur le moyen de déchargement (30), ledit moyen de régulation (40) étant disposé au-dessus du moyen de déchargement (30), dans la position de service dudit godet, le moyen de déchargement (30), le moyen de régulation (40), étant attelés respectivement à deux moteurs d'entraînement (M1, M2). Le godet (10) incorpore un moyen d'asservissement adapté à couper l'alimentation ou à réduire la vitesse du moteur (M2) d'entraînement du moyen de régulation (40), lorsque le couple moteur absorbé par le moteur (M1) d'entraînement du moyen de déchargement (30), atteint un certain seuil.

## Description

La présente invention se rapporte à un godet de distribution de matière.

Un tel godet comprend une benne destinée à contenir de la matière et qui inclut un moyen de déchargement de ladite matière. Ce moyen de déchargement peut prendre la forme d'un tapis roulant, d'une vis sans fin, et qui est conçu pour déplacer latéralement la matière dans le godet de sorte à la distribuer au travers d'une ouverture pratiquée dans une paroi latérale de la benne.

On peut utiliser un godet pour distribuer des fourrages aux animaux, tels que de la paille broyée, du maïs. La densité, la nature des fourrages font que parfois, la matière a du mal à sortir au travers de l'ouverture. Elle sort par paquets et parfois un amas se forme en amont de l'ouverture et la distribution est interrompue. Pour pallier cet inconvénient, il est connu d'utiliser un rotor qui est disposé au-dessus du moyen de déchargement, comme cela est présenté dans le brevet FR2804418 de la demanderesse. Ce rotor est pourvu de dents et il est entraîné à rotation pendant la distribution. Outre qu'il brasse la matière, il fonctionne également comme un moyen d'amenage de la matière sur le moyen de déchargement. Malgré la présence de ce rotor, il arrive encore que certaines matières, telle le maïs, s'agglomèrent, en stagnant sur le tapis et bouchent finalement l'ouverture de distribution.

On connaît encore à la lecture du brevet DE-A1-198 29 905, un appareil pour charger, transporter et distribuer de l'ensilage. Il se compose d'une benne délimitant un volume de chargement et susceptible d'être manoeuvrée par l'intermédiaire d'un attelage par un engin de levage. La benne est pourvue d'une lame coupante montée à pivotement par l'intermédiaire de vérins hydrauliques, pour saisir la matière et la charger au travers de l'ouverture de la benne. Deux ouvertures latérales de déchargement sont réalisées au travers des deux parois latérales de la benne. Un convoyeur transversal du type à bande transporteuse est monté dans le fond de la benne. Un dispositif de décompactage est installé à proximité de la paroi de fond de la benne. Il est constitué de deux vis hélicoïdales entraînées de manière hydraulique en sens opposés. Le relèvement de la benne active la mise en marche des deux moteurs d'entraînement des deux vis hélicoïdales. La matière déchiquetée retombe par gravité sur la bande transporteuse, puis est évacuée au travers de l'une ou de l'autre des deux ouvertures de déchargement latérales selon le sens de rotation du convoyeur. Dans la pratique, la distribution de l'ensilage n'est pas régulière, car altérée par un bourrage récurrent de la matière en aval de l'ouverture latérale ou par une difficulté du convoyeur transversal à fonctionner correctement.

Partant de cet état de l'art, le demandeur a ainsi cherché une solution pour supprimer la formation de bouchons pendant la distribution de la matière et réguler son débit, dans un godet de distribution, même pour des matières collantes réputées difficiles à vidanger.

A cet effet, est proposé un godet de distribution comprenant une benne incluant un moyen de déchargement conçu pour évacuer à l'extérieur son contenu au travers d'une ouverture pratiquée dans une paroi de ladite benne, un moyen capable de réguler le débit de matière susceptible de se déposer sur le moyen de déchargement, ledit moyen de régulation étant disposé au-dessus du moyen de déchargement, dans la position de service dudit godet, le moyen de déchargement, le moyen de régulation, étant attelés respectivement à deux moteurs d'entraînement ; selon l'invention, le godet incorpore un moyen d'asservissement adapté à couper l'alimentation ou à réduire la vitesse du moteur d'entraînement du moyen de régulation, lorsque le couple moteur absorbé par le moteur d'entraînement du moyen de déchargement, atteint un certain seuil.

En fonctionnement, le godet distribue la matière qu'il contient avec un débit pratiquement constant et ceci pour des matières réputées difficiles à distribuer (notamment copeaux, fourrages).

Selon une caractéristique additionnelle de l'invention, les deux moteurs sont des moteurs hydrauliques.

La puissance hydraulique est fournie par l'engin porteur du godet.

Selon une caractéristique additionnelle de l'invention, le moyen d'asservissement comprend un pressostat ou une valve 2/2 à sortie hydraulique, capable de couper l'alimentation du moteur d'entraînement du moyen de régulation.

Le pressostat, la valve 2/2, commande le fonctionnement d'un distributeur affecté à l'alimentation du moteur d'entraînement du rotor.

En variante, le moyen d'asservissement comprend une régulation proportionnelle, capable d'abaisser la pression ou le débit d'alimentation du moteur d'entraînement du moyen de régulation.

On obtient ainsi un fonctionnement sans à-coup de la machine.

Selon une caractéristique additionnelle de l'invention, le moyen de déchargement est un tapis roulant.

Ce moyen de déchargement convient pour délivrer des débits relativement importants, permettant de vidanger rapidement un godet de grande capacité.

En variante, le moyen de déchargement est une vis sans fin.

Il convient pour des godets de relativement petites capacités.

Selon une caractéristique additionnelle de l'invention, le moyen de régulation est un rotor formé d'un cylindre recouvert extérieurement de dents.

En fonctionnement, le rotor brasse la matière au-dessus du moyen de déchargement, ce qui l'amène à retomber régulièrement par gravité sur ledit moyen de déchargement.

En variante, le moyen de régulation est une vis sans fin.

En déplaçant la matière latéralement, elle la désunit, ce qui l'amène à retomber régulièrement par gravité sur ledit moyen de déchargement.

Selon une caractéristique additionnelle de l'invention, le godet est équipé d'un croc de désilage. Une telle machine est communément appelée désileuse distributrice.

Les caractéristiques de l'invention mentionnées ci-dessous, ainsi que d'autres, apparaîtront plus clairement à la lecture de la description suivante d'un exemple de réalisation, ladite description étant faite en relation avec les dessins joints, parmi lesquels:
la Fig. 1 représente une vue schématique en coupe transversale d'un godet de distribution selon l'invention,
la Fig. 2 représente une vue schématique en coupe longitudinale d'un godet de distribution selon l'invention et,
la Fig. 3 représente un schéma expliquant le fonctionnement d'un moyen d'asservissement dont est pourvu le godet selon l'invention.

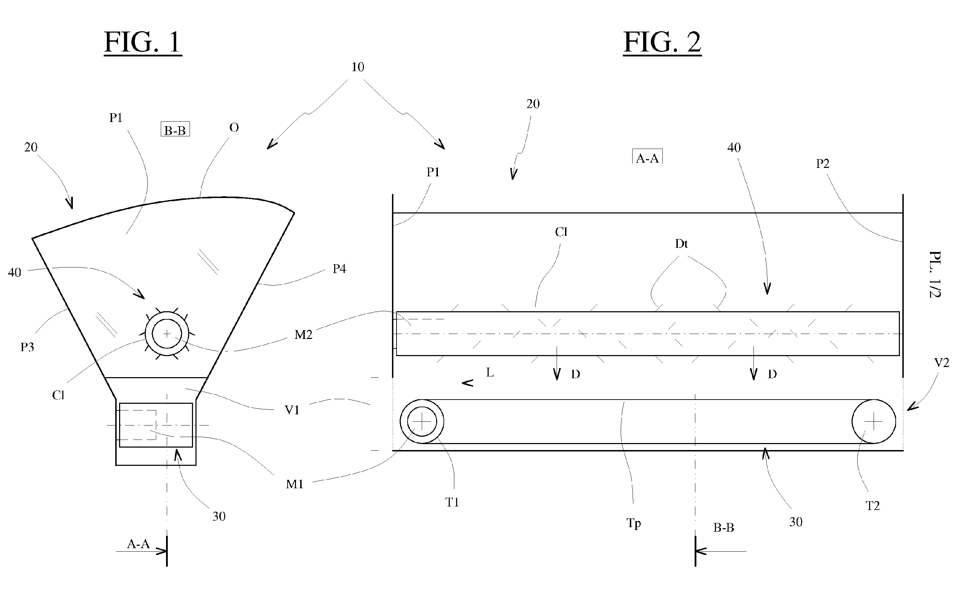

Le godet 10, présenté sur les Figs. 1 et 2, est destiné à être attelé à un engin porteur, être rempli de matière, puis être déplacé sur un lieu pour la distribuer. Il est présenté dans sa position de service. Il peut être utilisé dans de nombreux secteurs d'activité. Citons le domaine agricole, pour distribuer du fourrage, le BTP, pour déposer du remblai dans des tranchées, le métier de paysagiste, pour épandre des copeaux.

Le godet 10 se compose d'une benne 20 délimitée par une pluralité de parois P bordant une ouverture O de chargement. On dénombre sur ces Figs. 1 et 2, quatre parois principales : deux parois latérales P1 et P2, une paroi dorsale P3 et une paroi frontale P4.

Un moyen de déchargement 30 est disposé sous la benne 20, pour déplacer latéralement la matière que la benne contient en direction d'une ouverture V pratiquée au travers d'au moins une paroi latérale P1, P2, afin de l'évacuer à l'extérieur. Ces deux parois latérales P1, P2 sont respectivement traversées, sur la Fig. 2, par deux ouvertures V1 et V2. Le moyen de déchargement 30 est constitué, sur les Figs. 1 et 2, d'un tapis roulant comprenant au moins deux tambours d'entraînement T1, T2, et un tapis Tp circulant en boucle autour des tambours. L'un de ces tambours, T1 sur la Fig. 2, est moteur, c'est-à-dire capable d'entraîner le tapis Tp dans un sens ou dans l'autre. Il est entraîné à rotation par l'intermédiaire d'un moteur tel qu'un moteur hydraulique M1 et qui peut être raccordé au circuit hydraulique de l'engin porteur du godet, par exemple, par l'intermédiaire d'un boîtier hydraulique. En fonctionnement, la matière contenue dans le godet est acheminée latéralement sur la face supérieure du tapis Tp, puis traverse une ouverture V où elle est ainsi déposée sur le lieu de distribution. La flèche horizontale L indique l'une des deux directions possibles de la distribution, c'est-à-dire à gauche ou à droite du godet. Une trappe de fermeture mobile, non représentée, peut être déplacée le long de chaque paroi latérale P1, P2, qui est traversée par une ouverture V1, V2, correspondante. Elle permet de fermer ou de dégager ladite ouverture V1, V2, pour permettre la distribution.

Le moyen de déchargement 30 est constitué, dans une variante de réalisation, non représentée, d'une vis sans fin proposant cependant un débit de distribution moins important.

Pour faciliter la distribution, un rotor 40 est disposé au-dessus du moyen de déchargement 30 pour brasser la matière contenue dans la benne. Son fonctionnement amène la matière en suspension à retomber par gravité sur ledit moyen de déchargement 30 comme le suggèrent les flèches D. En fonctionnement, il se comporte comme un moyen pour réguler le débit de matière qui se dépose sur le tapis Tp en fonctionnement. A l'arrêt, et selon la nature du produit contenu dans la benne, sa présence forme un frein, à la descente par gravité de ladite matière sur le tapis. Précisons que le tapis roulant 30 est un moyen de transfert. Trop fortement chargé, il se déplace difficilement ou s'arrête à cause de frottements trop importants.

Le rotor 40 est constitué, sur ces Figs. 1 et 2, d'un cylindre Cl monté à rotation autour d'un axe tenu entre les deux parois latérales P1 et P2. Des dents Dt recouvrent la surface externe du cylindre Cl pour entraîner la matière et ainsi la brasser. Celui-ci est à cet effet entraîné à rotation par l'intermédiaire d'un moteur, tel qu'un moteur hydraulique M2 pouvant être raccordé au circuit hydraulique de l'engin porteur du godet, par l'intermédiaire du boîtier hydraulique. Le moyen de régulation 40 peut encore être constitué d'une vis sans fin.

Pour réguler son débit de distribution en toutes circonstances, c'est-à-dire pour distribuer toutes sortes de matières avec une régularité quasi constante, le godet 10 de l'invention est pourvu d'un moyen d'asservissement capable de moduler la vitesse du rotor en fonction de la vitesse du moyen de déchargement. De manière plus précise, lorsque la vitesse du tapis diminue ou devient nulle, c'est-à-dire quand le couple moteur que son moteur d'entraînement M1 absorbe, augmente anormalement sous l'effet de la charge qu'il porte ou de la formation d'un bouchon au niveau de l'ouverture de sortie, la vitesse de rotation du rotor diminue ou devient nulle pour éviter qu'il ne continue d'alimenter en matière ledit tapis.

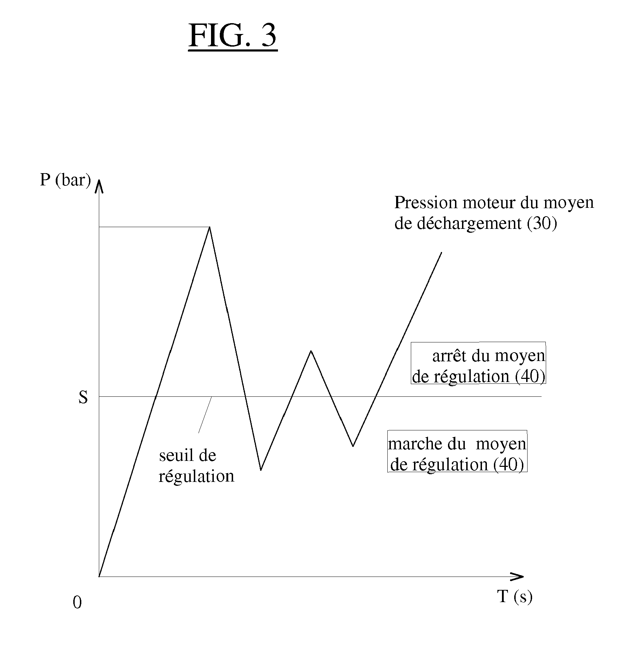

Dans la pratique et dans le cadre d'un fonctionnement hydraulique, le moyen d'asservissement comprend un moyen de détection de la pression tel qu'un pressostat. Ce dernier est capable de couper l'alimentation du moteur M2 d'entraînement du rotor 40 quand la pression d'alimentation du moteur M1 d'entraînement du tapis roulant 30 atteint un certain seuil, c'est-à-dire quand probablement le tapis est en train de caler ou a calé. Le schéma montré sur la Fig. 3 présente cette caractéristique :
« P (bar) » indique la pression hydraulique d'alimentation du moteur du moyen de déchargement 30 au cours du temps « T » d'un godet chargé et en cours de distribution. Au niveau d'un seuil S de pression, le pressostat commande le fonctionnement, électrique ou hydraulique, d'un distributeur auquel est raccordé le moteur d'entraînement du moyen de régulation 40. Au-dessus du seuil S, ce moteur n'est plus alimenté. En dessous de ce seuil S, il est alimenté.

Le fonctionnement du godet de l'invention se présente de la manière suivante. Le godet est attelé à un engin porteur, de la matière telle qu'un fourrage est chargée dans la benne du godet, puis il est déplacé, par exemple dans une stabulation pour la distribuer à des animaux.

On ouvre une trappe pour dégager une ouverture V de déchargement. Le moteur M1 d'entraînement du tapis roulant 30 est alimenté en fluide hydraulique sous pression par l'intermédiaire d'un distributeur commandé à l'aide d'une manette ou d'un boîtier de commande implanté dans la cabine de l'engin porteur.

En fonctionnement normal, c'est-à-dire quand la matière est déchargée régulièrement au travers de l'ouverture, le moteur M1 d'entraînement du moyen de déchargement 30 est alimenté en fluide hydraulique. Le moteur M2 d'entraînement du rotor 40 est également alimenté. Le rotor 40 brasse alors la matière qui, par gravité, se dépose régulièrement sur le tapis roulant 30 en mouvement.

Quand une matière humide, ou dense, commence à s'agglomérer en amont de l'ouverture V ou pèse par trop sur le tapis, la pression d'alimentation du moteur M1 augmente. Lorsqu'elle dépasse un certain seuil, l'alimentation du moteur M2 est coupée par le pressostat et le rotor s'arrête le temps que le début de bouchon puisse être résorbé, que la charge sur le tapis diminue. Quand la pression d'alimentation du moteur M1 s'abaisse sous un certain seuil, le moteur M2 est à nouveau alimenté et le rotor redémarre. Le tapis roulant est à nouveau alimenté régulièrement en matière.

Le godet de l'invention procure un déchargement régulier de tout type de matières qu'il est amené à distribuer.

Son fonctionnement est automatique.

Son prix de revient est concurrentiel au regard du service qu'il apporte.

Dans une première variante de réalisation, non représentée, le moyen d'asservissement comprend une valve 2/2, à sortie hydraulique, qui pilote le distributeur du moteur d'entraînement du moyen de régulation.

Dans une seconde variante de réalisation, non représentée, le moyen d'asservissement comprend une régulation proportionnelle qui abaisse la pression, le débit d'alimentation, du moteur M2 d'entraînement du rotor à l'approche d'un certain seuil de pression d'alimentation du moteur M1 d'entraînement du tapis roulant, et qui la réduit à zéro au-dessus dudit seuil. Il est à nouveau alimenté progressivement quand la pression s'abaisse sous le dit seuil. Le moyen pour abaisser la pression peut prendre la forme d'un circuit de dérivation de type « by-pass ». Le moyen pour abaisser le débit peut prendre la forme d'une vanne proportionnelle. Chacun de ces moyens étant par conséquent capable de modifier la vitesse du moteur M2 d'entraînement du rotor.

Par ailleurs, il existe des machines appelées désileuses, capables de charger du fourrage depuis un silo, pour ensuite le distribuer à des animaux. La machine est équipée d'un croc de chargement. Sa benne, de forme parallélépipédique, est pourvue dans son fond d'un moyen de déchargement, comme un tapis roulant. Une telle désileuse distributrice est considérée, au sens de l'invention, comme un godet de distribution et entre par conséquent dans la portée du brevet.

## Revendications

1. Godet de distribution (10) comprenant une benne (20) incluant un moyen de déchargement (30) conçu pour évacuer à l'extérieur son contenu au travers d'une ouverture (V) pratiquée dans une paroi (P) de ladite benne, un moyen (40) capable de réguler le débit de matière susceptible de se déposer sur le moyen de déchargement (30), ledit moyen de régulation (40) étant disposé au-dessus du moyen de déchargement (30), dans la position de service dudit godet, le moyen de déchargement (30), le moyen de régulation (40), étant attelés respectivement à deux moteurs d'entraînement (M1, M2), **caractérisé en ce qu'**il incorpore un moyen d'asservissement adapté à couper l'alimentation ou à réduire la vitesse du moteur (M2) d'entraînement du moyen de régulation (40), lorsque le couple moteur absorbé par le moteur (M1) d'entraînement du moyen de déchargement (30), atteint un certain seuil.

2. Godet de distribution (10) selon la revendication 1, **caractérisé en ce que** les deux moteurs (M1, M2) sont des moteurs hydrauliques.

3. Godet de distribution (10) selon la revendication 2, **caractérisé en ce que** le moyen d'asservissement comprend un pressostat ou une valve 2/2 à sortie hydraulique, capable de couper l'alimentation du moteur (M2) d'entraînement du moyen de régulation (40).

4. Godet de distribution (10) selon la revendication 2, **caractérisé en ce que** le moyen d'asservissement comprend une régulation proportionnelle, capable d'abaisser la pression ou le débit d'alimentation du moteur (M2) d'entraînement du moyen de régulation (40).

5. Godet de distribution (10) selon l'une quelconque des revendications précédentes, **caractérisé en ce que** le moyen de déchargement est un tapis roulant (30).

6. Godet de distribution (10) selon l'une quelconque des revendications 1 à 4, **caractérisé en ce que** le moyen de déchargement est une vis sans fin.

7. Godet de distribution (10) selon l'une quelconque des revendications précédentes, **caractérisé en ce que** le moyen de régulation (40) est un rotor formé d'un cylindre (Cl) recouvert extérieurement de dents (Dt).

8. Godet de distribution (10) selon l'une quelconque des revendications 1 à 6, **caractérisé en ce que** le moyen de régulation (40) est une vis sans fin.

9. Godet de distribution (10) selon l'une quelconque des revendications précédentes, **caractérisé en ce qu'**il est équipé d'un croc de désilage.
